# EUROPEAN PATENT SPECIFICATION

(11) **EP 1 342 389 B1**
(45) Date of publication and mention of the grant of the patent: **05.01.2011**
(21) Application number: 01990483.8
(22) Date of filing: 27.11.2001
(51) Int. Cl.: H04W 24/00, H04L 12/56

(54) **RADIO LINK MONITORING IN A TELECOMMUNICATIONS NETWORK**
FUNKVERBINDUNGSÜBERWACHUNG IN EINEM TELEKOMMUNIKATIONSNETZWERK
SURVEILLANCE DE LIAISONS RADIO DANS UN RESEAU DE TELECOMMUNICATIONS

(30) Priority: 13.12.2000 GB 0030342
(43) Date of publication of application: 10.09.2003
(73) Proprietor: Telefonaktiebolaget LM Ericsson (publ), 164 83 Stockholm (SE)
(72) Inventor: SODERSTRÖM, Raul, S-024 00 Kyrkslätt (SE); TORSNER, Johan, FIN-02600 Esbo (FI); WINBERG, Mikael, Jan, Are, FIN-00800 Helsingfors (FI)
(74) Representative: Kühn, Friedrich Heinrich
(86) International application number: PCT/EP2001/014135
(87) International publication number: WO 2002/049372

(56) References cited:
- WO-A-00/51380
- WO-A-00/59250
- WO-A-96/39749
- WO-A-98/44639
- WO-A-99/63764
- GB-A- 2 345 612
- "EN 301349 V6.3.1 Digital cellular telecommunication system (Phase 2+);General Packet Radio Service (GPRS); Mobile Station (MS)-Base Station System (BSS) interface; Radio Link Control/Medium Access Control (RLC/MAC) protocol (GSM 04.60 version 6.3.1 Release 1997)" EUROPEAN TELECOMMUNICATION STANDARD,XX,XX, June 1999 (1999-06), pages 1,26,27,52,53,71-75,87-95, XP002139283

## Description

### Field of the Invention

The present invention relates to radio link monitoring in a telecommunications network and in particular in a UMTS Terrestrial Radio Access Network.

### Background to the Invention

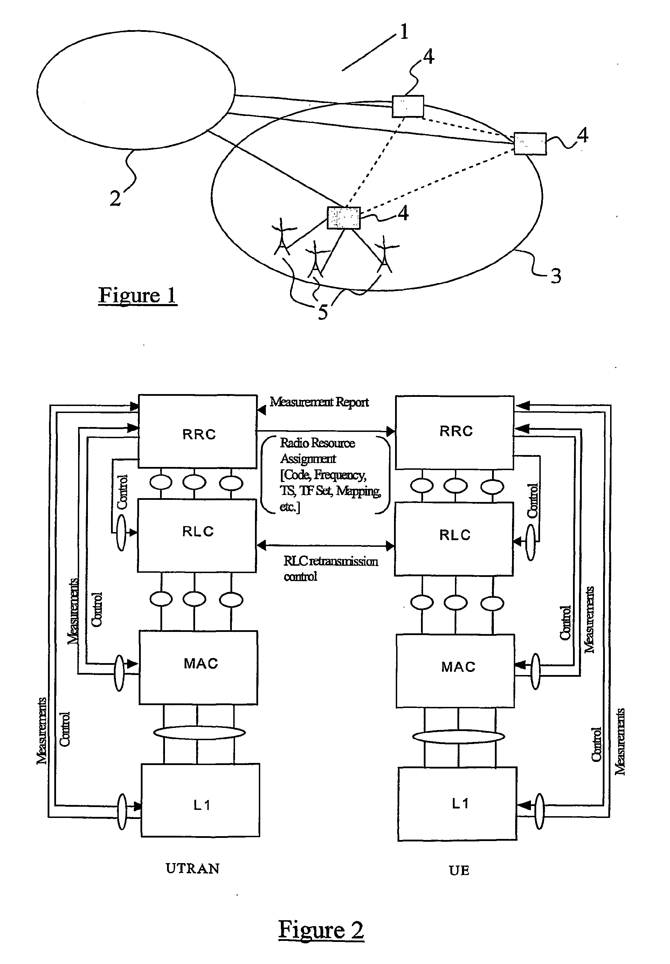

Figure 1 illustrates schematically a UMTS network 1 which comprises a core network 2 and a UMTS Terrestrial Radio Access Network (UTRAN) 3. The UTRAN 3 comprises a number of Radio Network Controllers (RNCs) 4, each of which is coupled to a set of neighbouring Base Stations (BSs) 5. BSs are sometimes referred to as Node Bs. Each Node B 5 is responsible for a given geographical cell and the controlling RNC 4 is responsible for routing user and signalling data between that Node B 5 and the core network 2. All of the RNCs are coupled to one another. A general outline of the UTRAN 3 is given in Technical Specification TS 25.401 V3.2.0 of the 3rd Generation Partnership Project.

User data received at an RNC from the core network is stored at a Radio Link Control (RLC) entity in one or more RLC buffers. User data generated at User Equipment (UE) is stored in RLC buffers of a peer RLC entity at the UE. User data (extracted from the RLC buffers) and signalling data is carried between an RNC and a UE using Radio Access Bearers (RABs). Typically, a UE is allocated one or more Radio Access Bearers (RABs) each of which is capable of carrying a flow of user or signalling data. RABs are mapped onto logical channels. At the Media Access Control (MAC) layer, a set of logical channels is mapped in turn onto a transport channel, of which there are three types:
a common transport channel which is shared by many different mobile terminals and which may extend in either the uplink or the downlink direction (one type of common channel is a Forward Access CHannel (FACH));
a "dedicated" transport channel (DCH) which is allocated to a single mobile terminal - DCHs are allocated in pairs of uplink and downlink channels; and
a downlink shared channel (DSCH) which is mapped to a small number of mobile terminals.

Several transport channels are in turn mapped at the physical layer onto one or more physical channels for transmission over the air interface (referred to as the Uu interface) between a Node B and a UE.

Figure 2 illustrates certain of the layers present at a UE and UTRAN of a UMTS network. The UTRAN provides UEs with an "always on" connection. During periods of low activity, when perhaps only signalling information (or low level data transfer) is being exchanged between the UE and the network, the UE is allocated a common channel. However, following an increase in data volume, the network may decide to switch the connection from a common channel to a dedicated channel (and a downlink shared channel). For example, a decision may be made to switch from a FACH/RACH channel to a DCH. The decision to switch is made by the Radio Resource Control (RRC) entity of the RNC.

The RLC entity is responsible for various control functions including the Automatic_Repeat_reQuest (ARQ) mechanism which is responsible for handling the retransmission of packets in the event of loss or erroneous receipt. The performance of the RLC, and in particular of the ARQ mechanism, depends upon the choice of a number of parameters, e.g. timers such as Timer_Poll and Timer_Status_Prohibit. In order to optimise the settings, an accurate measurement of the radio round trip delay (RTD) between the two peer RLC entities is required. In addition, an accurate estimate of the propagation delay (PD) from the UE to the Node B (i.e. the actual one-way radio interface delay as measured during RACH access - 3G TS 25.435 V3.2.0) is required in order to support the fast setup of a dedicated channel, following a switch from a common channel to a dedicated channel, or at RAB establishment if that involves a transition from common to dedicated channels.

In current implementations, preconfigured values of the RTD are used by the RLC. Different values are selected depending upon channel type (e.g. dedicated or common). The RTD may vary considerably during a connection, e.g. due to the introduction of an Iur interface (i.e. where an additional RNC is introduced into the link between the UE and the core network) and the variable delays introduced by scheduling operations in the MAC entity. Whilst it is possible to monitor these changes using external protocol analysing equipment, or test software monitoring the RLC, this is not really practical as measurements made in this way cannot be ordered by the RLC. In any case, the results achieved are dependent on the method used and may not be sufficiently accurate - the use of inaccurate RTD dependent parameters may severely degrade the performance of the RLC protocol.

The propagation delay (PD) from the UE to the RBS is included in each Iub CCH data frame sent from the NodeB to the RNC when something is being transmitted in the uplink direction on a common channel (RACH). However, if the UE has no data to send, no PD value is included at the NodeB. This problem arises especially for the RLC Unacknowledged Mode (UM) which does not require retransmission of data sent on the downlink, on the uplink. If an RLC UM user has mostly downlink traffic, e.g. streaming video, then the PD value is updated only seldomly by uplink transmission. If an incorrect or out of date PD is used at setup of a dedicated channel, the procedure to achieve synchronisation, and thereby the complete channel switch procedure or RAB establishment procedure takes longer than is the case when an accurate PD value is available.

W09639749 describes within the context of a second generation network a mechanism for determining the air interface propagation delay. The determined delay provides a guard time between TDM transmissions. The mechanism relies upon polling messages sent from the network transmitter to the user station.

### Statement of the Invention

The object of the present invention is to overcome the above mentioned problems, i.e. to enable on demand measurement of the RTD and/or to provide a mechanism for requesting a transmission in the uplink direction, thereby allowing the network to update the PD value.

According to a first aspect of the present invention there is provided a method of inspecting a communication link between a UE and a Radio Access Network (RAN) of a mobile telecommunications network so as to measure the round trip delay between respective RLC entities at the UE and the RAN, the method being characterised by the steps of:
sending a Protocol Data Unit (PDU) containing a loop request from the RLC entity located at a serving RNC of the RAN to the peer RLC entity located at the UE;
receiving the PDU at said peer RLC entity and recognising the PDU as containing a loop request; and
in response to the loop request, automatically sending a response PDU from the RLC entity at the UE to the RLC entity of the RAN.

The present invention is particularly applicable to UMTS networks. However, it may also be employed in other network architectures using an ARQ mechanism.

The method of the present invention may be used to measure the RTD between the peer RLC entities, i.e. the RTD equals the time delay between the sending of the PDU from the RLC entity of the RAN and the receipt of the response at that RLC entity. A number of PDUs containing loop requests may be sent from the RLC entity of the RAN, in which case the RTD may be estimated by averaging the delays between the sending of the PDUs containing the loop requests and the receipt of the respective responses.

The present invention allows the RLC entity of the RAN, which is typically located in the RNC serving the UE, to dynamically reconfigure certain of the parameters used by the RNC entity, e.g. timers. The sending of loop request containing PDUs may be ordered by the RLC entity, e.g. periodically, or may be ordered by a higher (e.g. traffical or O&M function).

The appropriate protocol specifies that the response or loop PDU shall be returned by the UE to the RNC as soon as possible, with priority over any other traffic. It is not therefore up to each individual UE to decide how long to wait before returning the response PDU. Thus the procedure can be used by the RNC to accurately measure the RTD.

The present invention may be used to monitor the quality of a communication link. For example, the PDU sent from the RLC entity of the RAN may contain a data payload, with the peer RLC entity incorporating the data payload into the response PDU. Where encryption and decryption is carried out at protocol layers within or beneath the RLC entity, this mechanism may be used to verify the correct operation of the encryption and decryption routines (e.g. the use of common encryption keys) by comparing the sent and received data.

The invention may be implemented by defining a Loop PDU for the RLC protocol. When an RLC entity receives a Loop PDU it returns a response PDU to the sender in the next available Transmission Time Interval (TTI). Preferably the Loop PDU contains a sequence number.

Where a UE has an RLC entity having only downlink transmission, the response PDU may be returned to the sender on the uplink of RB1, RB2 or RB3 (which always exist, uplink and downlink). The choice of RB1, RB2 or RB3 may be identified in the Loop PDU (e.g. in the PDU header).

The invention may be implemented by using a super field of an existing RLC protocol PDU to identify the PDU as requesting a response. A super field is a data field in a control PDU, e.g. Status PDU. By piggybacking the loop super field on to a normal data PDU, unnecessary overheads can be avoided.

The method may further comprise receiving the response PDU at a Node B located between said UE and said RLC entity of the RAN, carrying out a Propagation Delay (PD) measurement between the UE and the Node B, adding the PD to the response PDU at the NodeB, and forwarding the response PDU to said RLC entity of the RAN.

The response PDU will be sent on a RACH. The PD is included in the Iub CCH FP data frame at the NodeB. Typically, the loop request PDU is sent on a FACH. The PD received by the RNC from the Node B may then be used by the NodeB prior to or during a channel switch from a CCH to a DCH.

This approach may be used to force the sending of a packet containing a measure of the PD to the RNC. The PD measurement can later be made available to the Node B by the RNC when required - it is not necessary to wait for something else to trigger the sending of data on an uplink common channel.

According to a second aspect of the present invention there is provided a method of dynamically configuring an RLC entity of a Radio Access Network (RAN) in respect of a communication link between a UE and the Radio Access Network (RAN) by measuring the round trip delay between the RLC entity at the RAN and an RLC entity at the UE, the method comprising:
measuring the round trip delay between the RLC entity at the RAN and a peer RLC entity at the UE using the method of the above first aspect of the invention; and
receiving the response PDU at the RLC entity of the RAN, and using the response PDU to configure the receiving RLC entity.

According to a third aspect of the present invention there is provided a Radio Network Controller (RNC) of a Radio Access Network (RAN), the RNC comprising means for implementing a RLC protocol to inspect a communication link between a UE and a Radio Access Network (RAN) to measure the round trip delay between respective RLC entities at the UE and the RAN, **characterised in that** said means is arranged to:
send a Protocol Data Unit (PDU) containing a loop request from the RLC entity located at a serving RNC of the RAN to the peer RLC. entity located at the UE;
receive the PDU at said peer RLC entity and recognise the PDU as containing a loop request; and
in response to the loop request, automatically send a response PDU from the RLC entity at the UE to the RLC entity of the RAN.

According to a fourth aspect of the present invention there is provided User Equipment (UE) having means for facilitating the inspection of a communication link between the UE and a Radio Access Network (RAN) of a mobile telecommunications network to measure the round trip delay between respective RLC entities at the UE and the RAN, the UE being characterised by:
means for receiving a PDU containing a loop request from the RLC entity located at a serving RNC of the RAN;
means for recognising the PDU as containing a loop request; and
means for responding to the loop request by automatically sending a response PDU to the RLC entity of the RAN.

### Brief Description of the Drawings

Figure 1 illustrates schematically a UMTS network comprising a core network and a UTRAN;
Figure 2 illustrates schematically certain protocol layers present at nodes of the network of Figure 1;
Figure 3 is a flow diagram illustrating a method of monitoring a communication link in the network of Figure 1.

### Detailed Description of a Preferred Embodiment

A UMTS network incorporating a UTRAN has been described above with reference to Figures 1 and 2. The following description concerns such a UMTS network, although it requires a modification to the RLC protocol which is implemented in the UTRAN (at the RNCs) and in the UEs. In particular, the RLC protocol is modified to specify a new so-called Loop Protocol Data Unit (PDU) which is distinguished from other RLC PDUs by a parameter placed in the header portion.

An RLC entity located at an RNC may initiate the sending of a Loop PDU either of its own accord or under instruction from a higher layer. The Loop PDU includes a payload section which may remain empty or may contain data. The PDU is passed to lower layers at the RNC (including the MAC layer) for transmission to the destination UE via the Node B. The Loop PDU is received at the UE and is passed to the peer RLC entity. This entity checks the contents of the PDU header and identifies the PDU as a Loop PDU. As a result of this identification, the RLC entity constructs a Return PDU which is sent to the RLC entity at the RNC. This RLC entity receives the Return PDU, examines the PDU header, and identifies the PDU as a Return PDU. It is noted that only the Loop PDU is looped back to the sender. Non loop PDUs are unaffected. It will be appreciated that preferably the RLC protocol is modified to specify the Return PDU.

Where a UE has been allocated to common traffic channels in the downlink and uplink directions, the Loop PDU and Response PDU will be carried on these common channels. However, when available the PDUs may be sent on DCHs and DSCHs.

The mechanism described in the preceding paragraph may be used for the following purposes:
1. By starting a timer at the sending RLC entity at the time of sending of the Loop PDU (either when the PDU is passed the MAC entity or when the PDU is sent out from the RNC), and stopping the timer upon receipt of the response PDU, it is possible to measure the Round Trip Delay (RTD) for the link. The measurement is used for run-time configuration of the RLC entity.
2. When a Response PDU is sent from the RLC entity of a UE on a RACH, that PDU will result in measurement of the PD from the UE to the NodeB being made at the NodeB. The measured PD is automatically included in every Iub common channel data frame prepared by the NodeB and sent to the RLC entity at the RNC. The Loop PDU therefore provides a mechanism for "forcing" the UE to update the PD.
3. By including known data in the payload section of the Loop PDU, it is possible to monitor the quality and/or correct operation of the link between the RLC entities. For example, where user data is encrypted and decrypted at layers beneath the RLC layer, the payload data of the Loop PDU will be encrypted at the sender, decrypted at the receiver, incorporated into the payload of the Return PDU, encrypted, decrypted at the receiver, and finally passed back to the RLC entity of the RNC. By comparing the contents of the sent Loop PDU with the contents of the Return PDU, the correct operation of the encryption mechanism can be verified.

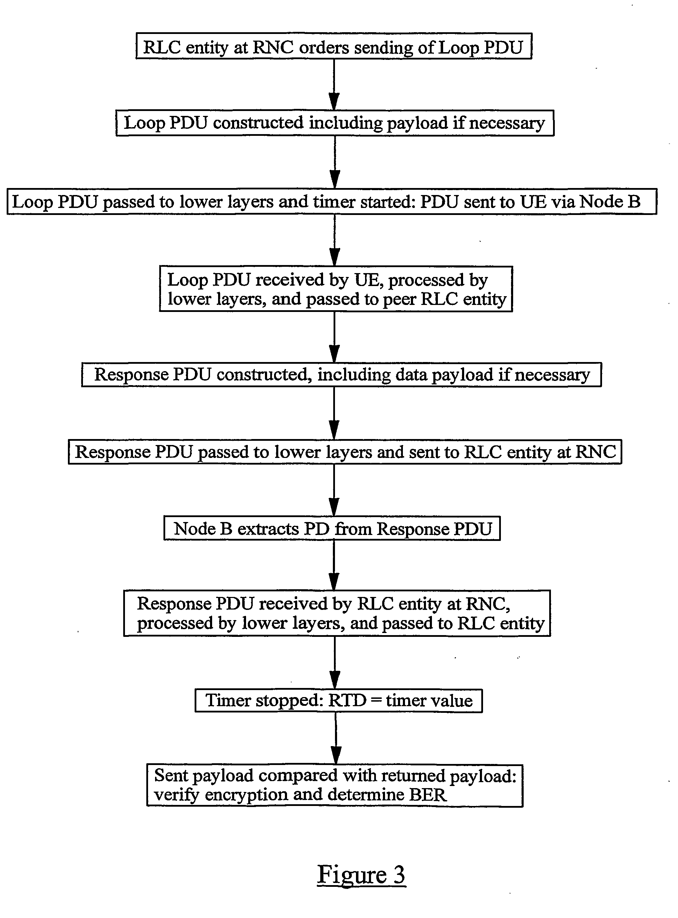

A procedure combining steps 1, 2, and 3 is illustrated in the flow diagram of Figure 3.

It will be appreciated by the person of skill in the art that various modifications may be made to the above described embodiments without departing from the scope of the present invention. For example, rather than amending the RLC protocol to define a new Loop PDU (and Response PDU), the loop function may be implemented by using a super field in the existing RLC control PDU. The loop super field can be "piggybacked" on a normal data PDU to avoid unnecessary overheads.

## Claims

1. A method of inspecting a communication link between a UE and a Radio Access Network (RAN) of a mobile telecommunications network so as to measure the round trip delay between respective RLC entities at the UE and the RAN, the method being **characterised by** the steps of:
sending a Protocol Data Unit (PDU) containing a loop request from the RLC entity located at a serving RNC of the RAN to the peer RLC entity located at the UE;
receiving the PDU at said peer RLC entity and recognising the PDU as containing a loop request; and
in response to the loop request, automatically sending a response PDU from the RLC entity at the UE to the RLC entity of the RAN.

2. A method according to claim 1 and comprising starting a timer at sending of the Loop PDU and stopping the timer upon receipt of the response PDU, wherein the timer value is a measure of the RTD between the peer RLC entities.

3. A method according to claim 2, wherein a number of PDUs containing loop requests may be sent from the RLC entity of the RAN, and the RTD is estimated by averaging the delays between the sending of the PDUs containing the loop requests and the receipt of the respective responses.

4. A method according to any one of the preceding claims, wherein the RLC entity is located in the RNC serving the UE, and the RLC uses the Loop and Response PDUs to dynamically reconfigure parameters used by the RLC entity.

5. A method according to any one of the preceding claims, wherein the sending of a loop request containing PDU is ordered by the RLC entity.

6. A method according to any one of the preceding claims, wherein the PDU sent from the RLC entity of the RAN contains a data payload, with the peer RLC entity incorporating the data payload into the response PDU.

7. A method according to claim 6, wherein the sending RLC entity compares the sent and received data to inspect the quality of the link between the peer RLC entities.

8. A method according to claim 7, wherein encryption and decryption is carried out at protocol layers within or beneath the RLC entities, and the result of said comparison is used to verity the correct operation of the encryption and decryption routines

9. A method according to claim 7 or 8, wherein the result of said comparison is used to check the bit error rate (BER) of the communication link.

10. A method according to any one of the preceding claims and comprising:
receiving the response PDU at a Node B located between said UE and said RLC entity of the RAN;
carrying out a Propagation Delay (PD) measurement between the UE and the Node B; and
adding the PD to the response PDU at the NodeB, and forwarding the response PDU to said RLC entity of the RAN.

11. A method of dynamically configuring an RLC entity of a Radio Access Network (RAN) in respect of a communication link between a UE and the Radio Access Network (RAN) and comprising:
measuring the round trip delay between the RLC entity at the RAN and a peer RLC entity at the UE using the method of any one of the preceding claims; and
receiving the response PDU at the RLC entity of the RAN, and using the response PDU to configure the receiving RLC entity.

12. A Radio Network Controller (RNC) of a Radio Access Network (RAN), the RNC comprising means for implementing a RLC protocol to inspect a communication link between a UE and a Radio Access Network (RAN) to measure the round trip delay between respective RLC entities at the UE and the RAN, **characterised in that** said means is arranged to:
send a Protocol Data Unit (PDU) containing a loop request from the RLC entity located at a serving RNC of the RAN to the peer RLC entity located at the UE;
receive the PDU at said peer RLC entity and recognise the PDU as containing a loop request; and
in response to the loop request, automatically send a response PDU from the RLC entity at the UE to the RLC entity of the RAN.

13. User Equipment (UE) having means for facilitating the inspection of a communication link between the UE and a Radio Access Network (RAN) of a mobile telecommunications network to measure the round trip delay between respective RLC entities at the UE and the RAN, the UE being **characterised by**:
means for receiving a PDU containing a loop request from the RLC entity located at a serving RNC of the RAN;
means for recognising the PDU as containing a loop request; and
means for responding to the loop request by automatically sending a response PDU to the RLC entity of the RAN.

## Patentansprüche

1. Verfahren zum Prüfen einer Kommunikationsverbindung zwischen einem UE (Teilnehmergerät) und einem Funkzugangsnetz (RAN) eines Mobiltelekommunikationsnetzes, um die Umlaufverzögerung zwischen jeweiligen RLC(Funkverbindungssteuerung)-Instanzen am UE und dem RAN zu messen, wobei das Verfahren durch folgende Schritte **gekennzeichnet** ist:
Senden einer Protokolldateneinheit (PDU), die eine Schleifenanforderung von der an einer Serving-RNC (Serving Funknetzsteuerung) des RAN angeordneten RLC-Instanz an die am UE angeordnete Peer-RLC-Instanz enthält;
Empfangen der PDU an der Peer-RLC-Instanz und Erkennen, dass die PDU eine Schleifenanforderung enthält; und
als Antwort auf die Schleifenanforderung automatisches Senden einer Antwort-PDU von der RLC-Instanz am UE an die RLC-Instanz des RAN.

2. Verfahren nach Anspruch 1 und umfassend, dass beim Senden der Schleifen-PDU ein Timer gestartet wird und der Timer nach Empfang der Antwort-PDU gestoppt wird, worin der Timer-Wert ein Maß für die RTD (Umlaufverzögerung) zwischen den Peer-RLC-Instanzen ist.

3. Verfahren nach Anspruch 2, worin eine Anzahl von Schleifenanforderungen enthaltenden PDUs von der RLC-Instanz des RAN gesendet werden können und die RTD durch Mittelung der Verzögerungen zwischen dem Senden der die Schleifenanforderungen enthaltenden PDUs und dem Empfang der jeweiligen Antworten geschätzt wird.

4. Verfahren nach einem der vorhergehenden Ansprüche, worin die RLC-Instanz in der das UE bedienenden RNC angeordnet ist und die RLC die Schleifen- und Antwort-PDUs verwendet, um von der RLC-Instanz benutzte Parameter dynamisch zu rekonfigurieren.

5. Verfahren nach einem der vorhergehenden Ansprüche, worin das Senden einer eine Schleifenanforderung enthaltenden PDU von der RLC-Instanz bestellt wird.

6. Verfahren nach einem der vorhergehenden Ansprüche, worin die von der RLC-Instanz des RAN gesendete PDU eine Datennutzlast enthält, wobei die Peer-RLC-Instanz die Datennutzlast in die Antwort-PDU einfügt.

7. Verfahren nach Anspruch 6, worin die sendende RLC-Instanz die gesendeten und empfangenen Daten vergleicht, um die Qualität der Verbindung zwischen den Peer-RLC-Instanzen zu prüfen.

8. Verfahren nach Anspruch 7, worin Verschlüsselung und Entschlüsselung auf Protokollschichten innerhalb oder unterhalb der RLC-Instanzen ausgeführt wird und das Ergebnis des Vergleichs benutzt wird, um die korrekte Arbeitsweise der Verschlüsselungs- und Entschlüsselungsroutinen zu verifzieren.

9. Verfahren nach Anspruch 7 oder 8, worin das Ergebnis des Vergleichs benutzt wird, um die Bitfehlerrate (BER) der Kommunikationsverbindung zu prüfen.

10. Verfahren nach einem der vorhergehenden Ansprüche und umfassend:
Empfangen der Antwort-PDU an einem zwischen dem UE und der RLC-Instanz des RAN angeordneten B-Knoten;
Ausführen einer PD(Ausbreitungsverzögerung)-Messung zwischen dem UE und dem B-Knoten; und
Addieren der PD zur Antwort-PDU am B-Knoten und Weiterleiten der Antwort-PDU an die RLC-Instanz des RAN.

11. Verfahren zum dynamischen Konfigurieren einer RLC-Instanz eines Funkzugangsnetzes (RAN) hinsichtlich einer Kommunikationsverbindung zwischen einem UE und dem Funkzugangsnetz (RAN), Folgendes umfassend:
Messen der Umlaufverzögerung zwischen der RLC-Instanz am RAN und einer Peer-RLC-Instanz am UE unter Verwendung des Verfahrens von einem der vorhergehenden Ansprüche; und
Empfangen der Antwort-PDU an der RLC-Instanz des RAN und Verwenden der Antwort-PDU, um die empfangende RLC-Instanz zu konfigurieren.

12. Funknetzsteuerung (RNC) eines Funkzugangsnetzes (RAN), wobei die RNC ein Mittel umfasst, um ein RLC-Protokoll zum Prüfen einer Kommunikationsverbindung zwischen einem UE und einem Funkzugangsnetz (RAN) zu implementieren, damit die Umlaufverzögerung zwischen jeweiligen RLC-Instanzen am UE und dem RAN gemessen wird, **dadurch gekennzeichnet, dass** das Mittel angeordnet ist zum:
Senden einer Protokolldateneinheit (PDU), die eine Schleifenanforderung von der an einer Serving-RNC des RAN angeordneten RLC-Instanz an die am UE angeordnete Peer-RLC-Instanz enthält;
Empfangen der PDU an der Peer-RLC-Instanz und Erkennen, dass die PDU eine Schleifenanforderung enthält; und
als Antwort auf die Schleifenanforderung automatisches Senden einer Antwort-PDU von der RLC-Instanz am UE an die RLC-Instanz des RAN.

13. Teilnehmergerät (UE) mit einem Mittel zum Erleichtern der Prüfung einer Kommunikationsverbindung zwischen dem UE und einem Funkzugangsnetz (RAN) eines Mobiltelekommunikationsnetzes, um die Umlaufverzögerung zwischen jeweiligen RLC-Instanzen am UE und dem RAN zu messen, wobei das UE **gekennzeichnet ist durch**:
ein Mittel zum Empfangen einer PDU, die eine Schleifenanforderung von der an einer Serving-RNC des RAN angeordneten RLC-Instanz enthält;
ein Mittel zum Erkennen, dass die PDU eine Schleifenanforderung enthält; und
ein Mittel zum Beantworten der Schleifenanforderung **durch** automatisches Senden einer Antwort-PDU an die RLC-Instanz des RAN.

## Revendications

1. Procédé de contrôle d'une liaison de communication entre un équipement utilisateur (UE) et un réseau d'accès radioélectrique (RAN) d'un réseau de télécommunications mobiles de façon à mesurer le temps de propagation aller-retour (RTD) entre des entités de commande de liaison radioélectrique (RLC) respectives au niveau de l'UE et du RAN, le procédé étant **caractérisé par** les étapes consistant à :
envoyer une unité de données de protocole (PDU) contenant une demande de boucle provenant de l'entité RLC située au niveau d'un contrôleur de réseau radioélectrique (RNC) de desserte du RAN à l'entité RLC homologue située au niveau de l'UE ;
recevoir la PDU au niveau de ladite l'entité RLC homologue et reconnaître que la PDU contient une demande de boucle ; et
en réponse à la demande de boucle, envoyer automatiquement une PDU de réponse de l'entité RLC au niveau de l'UE à l'entité RLC du RAN.

2. Procédé selon la revendication 1 et comprenant le lancement d'un temporisateur au moment de l'envoi de la PDU de boucle et l'arrêt du temporisateur à la réception de la PDU de réponse, dans lequel la valeur de temporisateur est une mesure du RTD entre les entités RLC homologues.

3. Procédé selon la revendication 2, dans lequel un certain nombre de PDU contenant des demandes de boucle peuvent être envoyées à partir de l'entité RLC du RAN, et le RLD est estimé en calculant la moyenne des temps de propagation entre l'envoi des PDU contenant les demande de boucle et la réception des réponses respectives.

4. Procédé selon l'une quelconque des revendications précédentes, dans lequel l'entité RLC est située dans le RNC desservant l'UE, et la RLC utilise les PDU de boucle et de réponse pour reconfigurer de façon dynamique des paramètres utilisés par l'entité RLC.

5. Procédé selon l'une quelconque des revendications précédentes, dans lequel l'envoi d'une PDU contenant une demande de boucle est ordonné par l'entité RLC.

6. Procédé selon l'une quelconque des revendications précédentes, dans lequel la PDU envoyée à partir de l'entité RLC du RAN contient une charge utile de données, l'entité RLC homologue intégrant la charge utile de données dans la PDU de réponse.

7. Procédé selon la revendication 6, dans lequel l'entité RLC émettrice compare les données envoyées et reçues pour contrôler la qualité de la liaison entre les entités RLC homologues.

8. Procédé selon la revendication 7, dans lequel un cryptage et un décryptage sont effectués au niveau des couches de protocole à l'intérieur ou au-dessous des entités RLC, et le résultat de ladite comparaison est utilisé pour vérifier le fonctionnement correct des routines de cryptage et de décryptage.

9. Procédé selon la revendication 7 ou 8, dans lequel le résultat de ladite comparaison est utilisé pour vérifier le taux d'erreur binaire (BER) de la liaison de communication.

10. Procédé selon l'une quelconque des revendications précédentes et comprenant les étapes consistant à :
recevoir la PDU de réponse au niveau d'un noeud B situé entre ledit UE et ladite entité RLC du RAN ;
effectuer une mesure du temps de propagation (PD) entre l'UE et le noeud B ; et
ajouter le PD à la PDU de réponse au noeud B, et retransmettre la PDU de réponse à ladite entité RLC du RAN.

11. Procédé consistant à configurer de façon dynamique une entité RLC d'un réseau d'accès radioélectrique (RAN) par rapport à une liaison de communication entre un UE et le réseau d'accès radioélectrique (RAN), et comprenant les étapes consistant à :
mesurer le temps de propagation aller-retour entre l'entité RLC au niveau du RAN et une entité RLC homologue au niveau de l'UE en utilisant le procédé de l'une quelconque des revendications précédentes ; et
recevoir la PDU de réponse au niveau de l'entité RLC du RAN et utiliser la PDU de réponse pour configurer l'entité RLC réceptrice.

12. Contrôleur de réseau radioélectrique (RNC) d'un réseau d'accès radioélectrique (RAN), le RNC comprenant un moyen pour mettre en oeuvre un protocole RLC pour contrôler une liaison de communication entre un UE et un réseau d'accès radioélectrique (RAN) afin de mesurer le temps de propagation aller-retour entre des entités RLC respectives au niveau de l'UE et du RAN, **caractérisé en ce que** ledit moyen est agencé pour :
envoyer une unité de données de protocole (PDU) contenant une demande de boucle provenant de l'entité RLC située au niveau d'un RNC de desserte du RAN à l'entité RLC homologue située au niveau de l'UE ;
recevoir la PDU au niveau de ladite entité RLC homologue et reconnaître que la PDU contient une demande de boucle; et
en réponse à la demande de boucle, envoyer automatiquement une PDU de réponse à partir de l'entité RLC au niveau de l'UE à l'entité RLC du RAN.

13. Equipement utilisateur (UE) présentant des moyens pour faciliter le contrôle d'une liaison de communication entre l'UE et un réseau d'accès radioélectrique (RAN) d'un réseau de télécommunications mobiles pour mesurer le temps de propagation aller-retour entre des entités RLC respectives au niveau de l'UE et du RAN, l'UE étant **caractérisé par** :
un moyen pour recevoir une PDU contenant une demande de boucle provenant de l'entité RLC située au niveau d'un RNC de desserte du RAN;
un moyen pour reconnaître que la PDU contient une demande de boucle; et
un moyen pour répondre à la demande de boucle en envoyant automatiquement une PDU de réponse à l'entité RLC du RAN.
